# EUROPÄISCHE PATENTSCHRIFT

(11) **EP 2 594 429 B1**
(45) Veröffentlichungstag und Bekanntmachung des Hinweises auf die Patenterteilung: **11.01.2017**
(21) Anmeldenummer: 12007863.9
(22) Anmeldetag: 21.11.2012
(51) Int. Cl.: B60P 3/20

(54) **Kippbare Behältervorrichtung**
Tiltable container device
Dispositif avec récipient à bascule

(30) Priorität: 21.11.2011 DE 102011118920
(43) Veröffentlichungstag der Anmeldung: 22.05.2013
(73) Patentinhaber: Fahrzeugbau KEMPF GmbH, 56470 Bad Marienberg (DE)
(72) Erfinder: Kempf, Norbert, 56470 Bad Marienberg (DE)
(74) Vertreter: Hannke, Christian

(56) Entgegenhaltungen:
- EP-A1- 0 028 508
- DE-C1- 4 405 164
- US-A- 5 010 943
- US-B1- 7 183 484

## Beschreibung

Die Erfindung betrifft eine Kipp-Behältervorrichtung, insbesondere für den Straßen-, Schienen- und/oder Schiffsverkehr, mit einem Behältergehäuse, welches eine Bodenplatte und wenigstens vier, die Bodenplatte umgebende, Seitenwände aufweist, wodurch durch die Bodenplätte und die Seitenwände ein Behälterinnenraum aufgespannt ist, wobei wenigstens eine Seitenwand beweglich ausgebildet ist. Vorteilhaft ist diese Seitenwand hydraulisch, pneumatisch oder mittels Pendelmechanismus aufklappbar ausgebildet.

Aus dem bisherigen Stand der Technik sind entsprechende kippbare Behältervorrichtungen bekannt, welche vorwiegend als Auflieger oder als bewegbarer Bestandteil von Lastkraftwagen Verwendung finden. Derartige Behältervorrichtungen sind meist als Container oder Mulden ausgebildet und werden vorwiegend zum Transport von rieselfähigem oder schüttfähigem Material eingesetzt. Bei den Wänden dieser Container sind jeweils zwei Seitenwände einander gegenüberliegend an der Bodenplatte fest angeordnet, wobei die Ausrichtung der Seitenwände beispielsweise vertikal oder schräg in Bezug auf die Bodenplatte ausgebildet ist. Es sind Behältervorrichtungen bekannt, welche wenigstens eine bewegbare Wand aufweisen, welche beispielsweise als Rückwand oder als Seitenwand beweglich ausgebildet ist, so dass in einer aufgerichteten Schräglage der Behältervorrichtung das Transportgut leicht aus dieser heraus gleiten kann.

In der europäischen Patentanmeldung EP 0 028 508 A1 ist eine Gebilde aus einem rahmenartigen Element und einem als bewegliche und entnehmbare vertikale Trennwand folienartigen Element offenbart. Diese Trennwand besteht aus aufblasbaren schlauchartigen Segmenten. Die Zweckbestimmung dieser Trennwände ist die Abtrennung eines nicht gekühlten hinteren Bereichs von einem gekühlten vorderen Bereich in einem Kühltransporter. Durch die thermische Isolationswirkung der Trennwand wird der Energiebedarf für die Kühlung vermindert.

Aus Gründen der Stabilität und der Tragfähigkeit sind bekannte Behältervorrichtungen aus Metall ausgebildet und verfügen somit über eine hohe Wärmeleitfähigkeit. Ist die Umgebungstemperatur gering, so kühlen auch die Behältervorrichtung und das darin angeordnete Ladegut schnell aus. Dies wirkt sich besonders nachteilig auf Ladegut aus, welches empfindlich gegenüber Temperaturschwankungen ist. Kühlt ein derartiges Ladegut, wie beispielsweise Kartoffeln oder Zuckerrüben, aus und wird in diesem Zustand abgeladen, besteht die Möglichkeit der Bruch- und Rissbildung, wodurch die Produktqualität signifikant beeinflusst wird. Ferner besteht bei niedriger Umgebungstemperatur während des Transports von Obst und Gemüse die Gefahr, dass das Ladegut an der Behältervorrichtung festfriert und nur teilweise entladbar ist.

Besonders feinkörniges Ladegut neigt zudem dazu sich in Vertiefungen oder Rillen der Behältervorrichtung abzusetzen und nicht mit entladen zu werden. Dies bedingt einen zusätzlichen Reinigungsschritt vor der erneuten Beladung der Behältervorrichtung.

Daher ist es Aufgabe der vorliegenden Erfindung, eine kippbare Behältervorrichtung zur Verfügung zu stellen, welche eine bessere Temperaturisolierung im Vergleich zu gängigen Behältervorrichtungen bereitstellt. Zudem liegt der vorliegenden Erfindung die Aufgabe zugrunde, feinkörniges Transportgut nahezu vollständig aus der Behältervorrichtung zu entfernen.

Diese Aufgabe wird durch eine Kipp-Behältervorrichtung gemäß den Merkmalen des Patentanspruches 1 gelöst. Vorteilhafte Ausführungsformen und Weiterbildungen sind Gegenstand der Unteransprüche.

Ein wesentlicher Punkt der Erfindung liegt darin, dass ein flexibles, folienartiges Element zumindest teilweise an einem in dem Behälterinnenraum angeordneten rahmenartigen Element angeordnet ist, wobei das rahmenartige Element in wenigstens zwei Positionen entlang einer Achse des Behältergehäuses verschiebbar ist.

Vorteilhaft dient die Positionsänderung des rahmenartigen Elements entlang einer Achse der Kipp-Behältervorrichtung zur Positions- sowie zur Formänderung des folienartigen Elements. Im einfachsten Ausführungsfall ist das folienartige Element derart ausgebildet, dass es im aufgefalteten Zustand zumindest die Bodenplatte der Kipp-Behältervorrichtung flächenmäßig bedeckt und zu dieser im Wesentlichen horizontal, direkt benachbart angeordnet ist. Ferner kann das folienartige Element derart ausgebildet sein, dass es die Bodenplatte sowie wenigstens eine

Seitenwand, bevorzugt zwei unbewegliche Seitenwände und meist bevorzugt drei unbewegliche Seitenwände der Kipp-Behältervorrichtung flächenmäßig überspannt.

Durch Fixierung des folienartigen Elements an der dem rahmenartigen Element gegenüberliegenden Seitenwand der Kipp-Behältervorrichtung wird bei der Verschiebung des rahmenartigen Elementes auf zumindest eine der Positionen entlang einer Achse des Behältergehäuses das folienartige Element aufgefaltet und aufgespannt.

Das folienartige Element ist erfindungsgemäß einteilig ausgebildet und besteht erfindungsgemäß aus einem Material, welches in seiner Materialstärke dünn im Vergleich zu seiner Materialbreite bzw. -länge ausgebildet ist. Bevorzugt weist das folienartige Element eine Materialstärke im Bereich von 0,1 mm - 20 mm auf, besonders bevorzugt im Bereich von 1 mm - 10 mm. Zudem ist das folienartige Element flexibel ausgebildet und ist somit beispielsweise biegsam, verformbar, komprimierbar, aufrollbar oder auch zusammenfaltbar. Die Flexibilität ist vorteilhaft, da nach einer Kraftbeaufschlagung des folienartigen Elementes, beispielsweise in Form einer Zugkraft, dieses im Wesentlichen wieder in seine ursprüngliche Ausgangsposition und Ausgangsform rückführbar ist. Erfindungsgemäß ist das folienartige Element derart dehnbar ausgebildet, dass es unter Zugbeanspruchung um ein Vielfaches dehnbar ist. Die Materialfläche des folienartigen Elements vergrößert sich unter Zugbeanspruchung um wenigstens das Doppelte, bevorzugt um das Vierfache und meist bevorzugt um das Fünf- bis Zehnfache im Vergleich zu der Materialfläche in der Ausgangslage. In der Ausgangslage oder auch Ausgangsposition des folienartigen Elements wirkt auf dieses keine Zugspannung. Bevorzugt wirkt lediglich eine Druckkraft auf das folienartige Element, welche durch das arretierte, rahmenartige Element bedingt wird, um das folienartige Element im zusammengefalteten Zustand zu halten.

Ferner ist denkbar, dass das folienartige Element wetterfest und/oder wasserabweisend ausgebildet ist. Das folienartige Element kann beispielsweise aus wenigstens einem wasserfesten und/oder wasserabweisenden Material hergestellt oder mit einem solchen beschichtet sein. Dies ist vorteilhaft, da bei nach oben offenen Kipp-Behältervorrichtungen das folienartige Element der Witterung, wie Regen, Schneefall oder auch hohe Sommertemperaturen, ausgesetzt ist. Der Elastizitätsmodul des folienartigen Elements ist somit bevorzugt unabhängig von Witterungs- und Temperaturbedingungen.

Darüber hinaus kann das folienartige Element zumindest teilweise, bevorzugt im Bereich der Bodenplatte der Kipp-Behältervorrichtung, wasserdurchlässig ausgebildet sein. Dies erweist sich als vorteilhaft, sofern das Ladegut in starkem Regen transportiert wird. Regenwasser kann gezielt abfließen, wodurch Staunässe vermieden wird.

Ferner ist das folienartige Element langlebig ausgebildet, sodass auch nach mehrfacher erfindungsgemäßer Benutzung keine Qualitätseinbußen bedingt werden. Bevorzugt liegen chemische und physikalische Eigenschaften des folienartigen Elements im Wesentlichen unverändert vor. Vorteilhaft ist das folienartige Element reißfest ausgebildet, so dass bei kurzer, starker Kraftbeaufschlagung das folienartige Element intakt bleibt und eine Lochbildung vermieden wird.

Darüber hinaus ist denkbar, dass das folienartige Element wenigstens eine Materialschicht aufweist, bevorzugt auch mehrlagig ausgebildet ist. Die Materialschichten können hierbei jeweils eine im Wesentlichen gleiche Materialzusammensetzung aufweisen, sich aber selbstverständlich auch in ihrer Materialzusammensetzung und Materialstärke unterscheiden. So ist denkbar, dass mehrer Materialschichten zueinander horizontal oder vertikal angeordnet sind oder auch keine feste Orientierung zueinander aufweisen.

Ferner ist auch denkbar, dass die dem Behälterinnenraum zugewandten Flächen des folienartigen Elements, also diejenigen Flächen, welche mit dem Ladegut in direktem Kontakt stehen, beschichtet sind, beispielsweise antiseptisch oder antibakteriell, sodass Pilz-, Bakterien- oder Keimwachstum reduziert bzw. gänzlich verhindert wird. Derartige Beschichtungen können beispielsweise mittels metallischem Silber vorgesehen sein. Selbstverständlich ist die Art der Beschichtung nicht auf die hier beschriebenen Beispiele beschränkt, sondern kann weiter gefasst verstanden werden. So sind darüber hinaus auch Beschichtungen mit verbessertem Gleitwert denkbar, welche die Be- und Entladung der Kipp-Behältervorrichtung signifikant vereinfachen, da durch die Reduzierung der Reibung das Ladegut einfacher und schneller entnommen werden kann.

Vorteilhaft ist das folienartige Element zumindest teilweise an einem rahmenartigen Element angeordnet. Das rahmenartige Element ist vorteilhaft den Abmessungen des Behälterinnenraumes angepasst, sodass das rahmenartige Element passgenau in den Behälterinnenraum anordbar und bewegbar ist. Vorteilhaft ist das rahmenartige Element aus Metall, Leichtmetall, wie beispielsweise Aluminium, oder Kunststoff bzw. Verbundwerkstoffen hergestellt. Je nach Bedarf kann das rahmenartige Element aus zylindrischen Bauteilen, rohrförmigen Bauteilen mit variierendem Querschnitt, beispielsweise rund oder eckig, oder auch aus Massivbauteilen oder einer Mischung daraus ausgebildet sein. Das rahmenartige Element ist vorteilhaft zwischen zwei sich gegenüberliegenden Seitenwänden der Kipp-Behältervorrichtung angeordnet, wobei eine der Seitenwände beweglich, bevorzugt aufklappbar, ausgebildet ist. So kann das rahmenartige Element beispielsweise zwischen den die Längsrichtung der Kipp-Behältervorrichtung begrenzenden Seitenwänden, also Vorder- und Rückwand der Kipp-Behältervorrichtung angeordnet und auch in Längsrichtung der Kipp-Behältervorrichtung verschiebbar sein. Ferner ist denkbar, dass das rahmenartige Element zwischen den beiden sich in Längsrichtung der Kipp-Behältervorrichtung erstreckenden Seitenwänden angeordnet ist und senkrecht zur Längsrichtung der Kipp-Behältervorrichtung verschiebbar angeordnet ist.

Das rahmenartige Element ist vorteilhaft in wenigstens zwei Positionen entlang einer Achse der Kipp-Behältervorrichtung verschiebbar anordbar. Bevorzugt erfolgt diese Bewegung entlang der Längsachse bzw. der Querachse der Kipp-Behältervorrichtung. Unter der Längsachse ist hierbei die Achse zu verstehen, welche sich in Längsrichtung der Kipp-Behältervorrichtung erstreckt, also in der Richtung, in welcher die Kipp-Behältervorrichtung ihre größte geometrische Ausdehnung aufweist. Unter der Querachse ist die Achse zu verstehen, welche senkrecht zur Längsachse der Kipp-Behältervorrichtung angeordnet ist und welche in der Ausgangslage der Kipp-Behältervorrichtung mit der Längsachse eine horizontal angeordnete Ebene aufspannt. Als Ausgangslage der Kipp-Behältervorrichtung ist hierbei die im Wesentlichen horizontale Ausrichtung der Bodenplatte der Kipp-Behältervorrichtung zu verstehen, wie beispielsweise während des Beladens der Kipp-Behältervorrichtung oder des Transports des Ladeguts. Zum Entladen hingegen erfolgt eine Verkippung der Kipp-Behältervorrichtung, so dass die Bodenplatte, auch Kippbrücke genannt, von ihrer im Wesentlichen horizontalen Ausrichtung ausgelenkt wird und eine schiefe Ebene bildet. Die Kippbewegung kann hierbei beispielsweise entlang einer Schwenkachse in Längsrichtung (Querrichtung) der Kipp-Behältervorrichtung, so dass ein seitliches (rückwärtiges) Entladen ermöglicht wird.

Eine erste Position des rahmenartigen Elements ist als dessen Ausgangslage zu verstehen, wobei das folienartige Element, welches an dem rahmenartigen Element zumindest teilweise und lösbar angeordnet ist, zusammengefaltet oder auch komprimiert ebenfalls in seiner Ausgangslage vorliegt. Durch Kraftbeaufschlagung des rahmenartigen Elementes, beispielsweise in Längsrichtung der Kipp-Behältervorrichtung, werden dieses sowie das daran zumindest teilweise angeordnete folienartige Element aus der Ausgangslage ausgelenkt. Das folienartige

Element erfährt somit ebenfalls eine Kraftbeaufschlagung und wird auseinander gefaltet bzw. aufgefaltet. Dies erfolgt bevorzugt derart, dass das folienartige Element den Behälterinnenraum zumindest teilweise, bevorzugt nahezu gänzlich abdeckt, sodass bevorzugt drei nichtbewegbare Seitenwände und Bodenplatte flächig abgedeckt werden. Bevorzugt ist das rahmenartige Element in seiner Ausgangslage arretierbar.

Als zweite Position des rahmenartigen Elements ist im einfachsten Fall die Endposition zu verstehen, in welcher keine weitere Bewegung des rahmenartigen Elements in der bisherigen Verschiebungsrichtung mehr möglich ist. In dieser Endposition des rahmenartigen Elements ist das flexible folienartige Element beispielsweise in Längsrichtung der Kipp-Behältervorrichtung mit einer Zugkraft beaufschlagt. Das folienartige Element liegt in diesem Fall gänzlich aufgefaltet, beispielsweise in einer nach oben geöffneten u-Form vor. Dies ist vorteilhaft, da das folienartige Element somit im Wesentlichen parallel zu der Bodenplatte und zu den Seitenwänden der Kipp-Behältervorrichtung angeordnet ist, so dass das Volumen des Behälterinnenraums nahezu unverändert vorliegt. Durch diese Kraftbeaufschlagung des folienartigen Elementes wird eine Reduzierung der Faltenbildung des Materials bedingt, sodass eine leichte Be- und Entladung möglich ist, ohne das folienartige Element zu beschädigen und zu zerstören, bzw. um auch feinkörniges Ladegut, wie beispielsweise Getreide, vollständig aus dem Behälterinnenraum entfernen zu können.

Das rahmenartige Element ist vorteilhaft in mehr als zwei Positionen entlang einer Achse, beispielsweise Längsachse und/oder Querachse, der Kipp-Behältervorrichtung verschiebbar angeordnet. Bevorzugt erfolgt die Verschiebung stufenlos. Es ist jedoch auch denkbar, dass das rahmenartige Element lediglich in vorbestimmbaren Positionen verschiebbar angeordnet ist. Dies ist je nach Anwendungsfall beliebig wähl- und kombinierbar. In jeder vorbestimmbaren Position ist das rahmenartige Element arretierbar, so dass das rahmenartige Element auch als Trennelement dienen kann, um den Behälterinnenraum der Kipp-Behältervorrichtung zu unterteilen. Bevorzugt ist das rahmenartige Element als Ladetrennwand ausgebildet. Dies ist vorteilhaft, da somit temperaturempfindliches und temperaturunempfindliches Ladegut zeitgleich in nur einer Kipp-Behältervorrichtung transportiert werden kann.

Vorteilhaft ist die Anordnung des folienartigen Elements, bedingt durch die Positionsänderung des rahmenartigen Elements, reversibel ausgebildet. Wird das rahmenartige Element von der zweiten Position wieder in seine Ausgangsposition rückgeführt, so bedingt die flexible, elastische Ausbildung des folienartigen Elements ebenfalls dessen Relaxation und Rückführung in seine Ausgangslage. So kann das folienartige Element schnell und einfach verstaut werden.

Denkbar ist ferner auch, dass das folienartige Element zusätzliche Spannelemente aufweist, welche im einfachsten Ausführungsfall an der den Seitenwänden und der Bodenplatte zugewandten Elementflächen fest oder auch lösbar angeordnet sind, sodass nach Beendigung der Zugspannungsbeaufschlagung das folienartige Element schnell und zerstörungsfrei in seine ursprüngliche Ausgangsposition rückführbar ist, ohne dass Verklemmungen oder Beschädigungen bedingt werden. Denkbar wäre hierbei beispielsweise, dass eine Vielzahl derartiger Spannelemente an dem folienartigen Element in Bewegungsrichtung der Kipp-Behältervorrichtung angeordnet sind und beispielsweise aufgeklebt, zumindest teilweise an dem folienartigen Element fixiert oder durch Aussparungen des folienartigen Element in dessen Randbereichen durchführbar sind. Wird die Kraftbeaufschlagung auf das folienartige Element unterbrochen, bedingen die Spannelemente eine zugspannungsbedingte Faltenbildung und das folienartige Element faltet sich selbstständig in seine Ausgangslage zusammen.

Ferner ist auch denkbar, dass derartige Spannelemente direkt in das folienartige Element integriert sind und beispielsweise als Abschnitte mit einer höheren Rückführungskraft ausgebildet sind.

Wird das folienartige Element in der Kipp-Behältervorrichtung nicht mehr benötigt, so wird zunächst die Arretierung des rahmenartigen Elements gelöst, so dass dieses entlang wenigstens einer Achse der Kipp-Behältervorrichtung, bevorzugt der Längs- oder Querachse, frei verschiebbar wird. Das rahmenartige Element wird anschließend in seine Ausgangslage zurückgeführt und dort ebenfalls arretiert. Während dieses Rückführungsprozesses ist sicherzustellen, dass auch das folienartige Element zerstörungsfrei in seine Ausgangslage rückgeführt wird. Beschädigungen durch Verklemmen sind zu vermeiden. Dies wird beispielsweise mittels Spanngurten gelöst.

Ferner sind auch seil- bzw. bandähnliche Spannelemente denkbar, welche bei Rückführung des rahmenartigen Elements das folienartige Element bevorzugt vertikal anheben, so dass zwischen Bodenplatte und folienartigern Element ein Freiraum bedingt wird. Hierzu sind derartige Spannelemente im Bodenbereich des rahmenartigen Elements bevorzugt fest angeordnet, wobei eine Aufrolleinrichtung der Spannelemente im unteren Bereich der dem rahmenartigen Element zugewandten, gegenüberliegenden Seitenwand der Kipp-Behältervorrichtung angeordnet ist.

Befindet sich das rahmenartige Element in einer arretierten Position, so liegen die Spannelemente bevorzugt spannungsfrei vor. Wird das rahmenartige Element in seiner Ausgangslage rückgeführt, so wird bevorzugt automatisch der Aufrollmechanismus gestartet und die Spannelemente werden gespannt. Durch diesen Spannungsprozess wird das folienartige Element von der Bodenplatte der Kipp-Behältervorrichtung vertikal angehoben und kann sich während der gesamten Rückführung nicht mehr verklemmen. Selbstverständlich ist der Erfindungsgegenstand nicht hierauf begrenzt sondern beliebig erweiterbar.

Bei einer weiteren vorteilhaften Ausführungsform ist das folienartige Element entnehmbar angeordnet. Erfindungsgemäß ist das folienartige Element von dem rahmenartigen Element und bevorzugt ebenfalls von der dem rahmenartigen Element gegenüberliegenden unbeweglichen Seitenwand lösbar angeordnet. Dies ist besonders vorteilhaft für die Wartung, die Reparatur und die Reinigung der Kipp-Behältervorrichtung und auch des folienartigen Elementes selbst. Die lösbare Befestigung des folienartigen Elements an der dem rahmenartigen Element gegenüberliegenden unbeweglichen Seitenwand ist vorteilhaft, da bei der durch die Positionsänderung des rahmenartigen Elements bedingte Zugbeanspruchung eine elastische Dehnung des folienartigen Elements bedingt wird. Vorteilhaft ist das folienartige Element im unteren Bereich dieser Seitenwand, also in Nähe der Bodenplatte, und im oberen Bereich dieser Seitenwand lösbar angeordnet. Selbstverständlich ist die lösbare Fixierung nicht auf diese Bereiche der Seitenwand beschränkt sondern beliebig erweiterbar. Bevorzugt erfolgt die lösbare Fixierung des folienartigen Elements an der Seitenwand mit bekannten Mitteln, wie beispielsweise Verkleben oder Verspannen, auch unter zu Hilfenahme von Führungsschienen oder Spannösen. Die genannten Beispiele dienen lediglich der Veranschaulichung und sind nicht darauf beschränkt.

Selbstverständlich kann auch die dem rahmenartigen Element gegenüberliegende Seitenwand, an welcher das folienartige Element lösbar fixiert ist, beweglich ausgebildet sein.

Bei einer weiteren vorteilhaften Ausführungsform ist das folienartige Element aus einem Material ausgebildet, welches aus einer Gruppe von Materialien ausgewählt ist, welche Kunststoffe, Verbundwerkstoffe, faserverstärkte Kunststoffe und/oder Textilien enthält. Als Kunststoffe werden hierbei bevorzugt Elastomere verwendet, da durch deren flexible Eigenschaften nach Beendigung der Kraftbeaufschlagung eine Rückführung des folienartigen Elementes in seine Ausgangsposition und -form bedingt wird. Bei der Verwendung von Verbundwerkstoffen oder faserverstärkten Kunststoffen sind besondere Materialeigenschaften, wie beispielsweise Dehnbarkeit, Belastbarkeit, Temperaturbeständigkeit oder Druckbeständigkeit wichtig. So ist das folienartige Element aus einem elastischen Material ausgebildet, welches unter Kraftbeaufschlagung einen hohen Druck sowie starke Temperaturschwankungen, bevorzugt im Bereich von -40°C bis 80°C, standhält, ohne dass die Dehnbarkeit beeinflusst wird.

Ferner können für das folienartige Element auch jegliche Art von Textilien eingesetzt werden, welche beispielsweise auch imprägniert oder vorbehandelt vorliegen, sodass sie den Ansprüchen der Erfindung genügen. So wäre denkbar, dass ein Verbundmaterial aus Kunststoff und Textilmaterial verwendet wird, wobei das Textilmaterial der Verstärkung dient. Hierbei kann das Textilmaterial auch nur abschnittsweise in dem folienartigen Element angeordnet sein, beispielsweise um das folienartige Element in den Fixierungsbereichen zu verstärken.

Bei einer weiteren vorteilhaften Ausführungsform ist das folienartige Element als Thermoisolationsbarriere ausgebildet. Dies ist besonders vorteilhaft, wenn es sich bei dem Transportgut um temperaturempfindliche Materialien handelt, deren Qualität durch die starken Temperaturschwankungen der meist metallisch ausgebildeten Kipp-Behältervorrichtung verschlechtert wird und eine Isolierung bedingen. Im einfachsten Ausführungsbeispiel ist das folienartige Element vollständig als Thermoisolationsbarriere ausgebildet, so dass das Transportgut kältebrückenfrei transportiert werden kann, ohne beispielsweise an der Kipp-Behältervorrichtung anzufrieren. Ferner wäre auch denkbar, dass das folienartige Element eine zusätzliche Beschichtung bzw. Lage aufweist, welche thermoisolierende Eigenschaften aufweist. Hierzu kann es beispielsweise von Vorteil sein, dass die Flächen des folienartigen Elementes einseitig und/oder beidseitig beschichtet vorliegen.

Bei einer weiteren vorteilhaften Ausführungsform ist das rahmenartige Element in Längsrichtung des Behälterinnenraums in wenigstens einer ersten Position als Ausgangsposition und einer zweiten Position verschiebbar angeordnet. Dies ist vorteilhaft, da somit das an dem rahmenartigen Element zumindest teilweise befestigte folienartige Element in der Ausgangsposition zusammengefaltet vorliegt. Vorteilhaft ist hierbei das folienartige Element an einer dem rahmenartigen Element gegenüberliegend angeordneten Seitenfläche der Kipp-Behältervorrichtung lösbar fixiert, wobei diese Seitenwand eine von vertikal verschieden ausgebildeten Ausrichtung und bevorzugt eine zu dem rahmenartigen Element hin verlaufende, abnehmende Schräge aufweist. Bevorzugt ist diese Seitenwand als Vorderwand oder Bordwand ausgebildet, welche unmittelbar zu der Fahrerkabine des LKWs ausgerichtet ist, sofern die erfindungsgemäße Kipp-Behältervorrichtung als Auflieger oder Aufbau für LKWs vorgesehen ist.

Das rahmenartige Element ist in seiner ersten Position somit vorteilhaft an der unteren Kante der Schräge der Seitenwand angeordnet, sodass die Seitenwand mit dem rahmenartigen Element ein sich nach oben erweiterndes Raumvolumen aufspannt, welches zudem von den sich in Längsrichtung der Kipp-Behältervorrichtung erstreckenden beiden Seitenwänden zumindest teilweise begrenzt wird. Erfindungsgemäß wird das folienartige Element im zusammengefalteten Zustand seine Ausgangslage in diesem freien Volumen angeordnet.

Durch Kraftbeaufschlagung des rahmenartigen Elements in einer Bewegungsrichtung entlang einer Achse der Kipp-Behältervorrichtung, beispielsweise entlang der Längsachse, also von der bevorzugt unbeweglichen Vorderwand weg, wird das rahmenartige Element und zugleich auch das daran befestigte folienartige Element aus seiner Ausgangsposition ausgelenkt und in wenigstens eine weitere, zweite Position verschoben. Durch die Fixierung des folienartigen Elementes an der dem rahmenartigen Element gegenüberliegenden bevorzugt unbeweglichen Seitenwand der Kipp-Behältervorrichtung wird durch die Verschiebung des rahmenartigen Elementes das folienartige Element ebenfalls aufgefaltet und aufgespannt. Diese Seitenwand ist beispielsweise als Vorderwand quer zur Längsrichtung der Kipp-Behältervorrichtung ausgebildet und erfindungsgemäß zumindest teilweise, bevorzugt im Wesentlichen vollständig, von einem Abschnitt des folienartigen Elements überspannt bzw. bedeckt.

Vorteilhaft ist das folienartige Element an dem rahmenartigen Element durch Laschen fixiert, wobei die Fixierung sowohl an der Oberseite und/oder der Unterseite des rahmenartigen Elements erfolgt. Bevorzugt ist das folienartige Element umlaufend an dem rahmenartigen Element angeordnet, so dass kein Freiraum bedingt wird, durch welchen Ladegut austreten kann. Zudem ist das folienartige Element auch an der dem rahmenartigen Element gegenüberliegenden Seitenwand des Behälterinnenraumes derart fixiert, sodass bevorzugt mehrere Fixierungspunkte über die Fläche dieser Seitenwand angeordnet sind. Vorteilhaft ist das folienartige Element auch von dieser Seitenwand lösbar ausgebildet, beispielsweise verhakbar oder verklemmbar.

Bei einer weiteren vorteilhaften Ausführungsform ist das rahmenartige Element mittels schienenartiger Elemente, welche zumindest teilweise an einer der Seitenwände, bevorzugt an zwei sich gegenüberliegenden Seitenwänden, welche sich in Längsrichtung der Kipp-Behältervorrichtung erstrecken, fixiert sind, verschiebbar ausgebildet. Dies ist vorteilhaft, da die schienenartigen Elemente als Führung des rahmenartigen Elementes während dessen Verschiebung dienen. Somit kann eine leichte, kraftsparende Positionsveränderung des rahmenartigen Elements erzeugt werden. Als schienenartige Elemente können beispielsweise Leisten, Nuten, Schraubgewinde oder auch Rollen verstanden werden, sofern sich diese eignen, das rahmenartige Element in seiner Position unterschiedlich anzuordnen. Vorteilhaft ist auch das folienartige Element an diesen schienenartigen Elementen lösbar fixiert, sodass auch die Führung des folienartigen Elementes, beispielsweise mittels Rollen, ermöglicht wird. Somit wird das Aufspannen des folienartigen Elementes vereinfacht. Die Positionsänderung des rahmenartigen Elements kann manuell oder auch maschinell erfolgen.

Darüber hinaus ist denkbar, dass die schienenartigen Elemente einen Laufschutz aufweisen, sodass die schienenartigen Elemente weder durch Ladegut, folienartiges Element oder Verunreinigungen blockiert werden und nicht mehr funktionstüchtig sind.

Vorteilhaft ist auch denkbar, die schienenartigen Elemente an zwei sich gegenüberliegenden Seitenwänden anzuordnen, bevorzugt im unteren Bereich, benachbart zu der Bodenplatte oder auch im oberen Bereich der Seitenwände zur Öffnung der Kipp-Behältervorrichtung hin. Vorteilhaft sind die schienenartigen Elemente an beiden Seitenwänden auf gleicher Höhe und parallel zueinander angeordnet, sodass das Verschieben des rahmenartigen Elementes und des folienartigen Elementes ermöglicht werden. Bei einer weiteren vorteilhaften Ausführungsform weist das rahmenartige Element wenigstens eine Öffnung auf. Bevorzugt weist das folienartige Element ebenfalls eine Öffnung auf, welche zu der Öffnung des rahmenartigen Elements direkt benachbart angeordnet ist. Dies ist vorteilhaft, da durch diese Öffnung das Ladegut aus dem Behälterinnenraum ausgeführt werden kann. So ist beispielsweise denkbar, dass die Rückwand beispielsweise durch Entriegeln, durch Aufkippen der Kipp-Behältervorrichtung oder mittels Pendelmechanismus geöffnet werden kann. Vorteilhaft ist das rahmenartige Element entlang wenigstens einer Achse der Kipp-Behältervorrichtung derart verschiebbar, bis es direkt benachbart zu der Rückwand anordbar und arretierbar ist. Die Rückwand ist der Vorderwand gegenüberliegend angeordnet und im geschlossenen Zustand vertikal ausgerichtet, wobei das rahmenartige Element erfindungsgemäß zwischen der Vorder- und Rückwand der Kipp-Behältervorrichtung bewegbar angeordnet ist.

Ferner ist denkbar, dass das rahmenartige Element Verstrebungen, beispielsweise in Form von Längs- und/oder Querstreben aufweist, welche vorteilhaft das Zusammenfalten des folienartigen Elementes vereinfachen. Zudem sind derartige Verstrebungen auch vorteilhaft, um das folienartige Element in seiner Ausgangslage, also im zusammengefalteten Zustand, zu fixieren. Derartige Verstrebungen sind fest mit dem rahmenartigen Element verbunden, beispielsweise verklebt oder verschweißt. Es ist auch denkbar, dass die Verstrebungen lösbar vom rahmenartigen Element, beispielsweise mittel Klick- oder Schraubmechanismus, angeordnet sind, so dass in Abhängigkeit des Ladeguts die Verstrebung austauschbar ist.

Ferner sind aber auch mehrere Öffnungen des rahmenartigen Elements denkbar, welche nicht auf spezielle geometrische Ausführungen beschränkt sind.

Bei einer weiteren vorteilhaften Ausführungsform ist das folienartige Element an dem rahmenartigen Element lösbar angeordnet und das folienartige Element weist wenigstens eine Aussparung auf, welche im Wesentlichen deckungsgleich mit der wenigstens einen Öffnung des rahmenartigen Elements ausgebildet ist, sodass der Behälterinnenraum durch beide Öffnungen zugänglich ist. Dies ist vorteilhaft, da somit eine durchgängige Öffnung geschaffen wird, um das Ladegut aus dem Behälterinnenraum sowohl aus dem folienartigen Element als auch durch das rahmenartige Element aus dem Behälterinnenraum hinauszubefördern.

Bei einer weiteren vorteilhaften Ausführungsform ist wenigstens ein Verschließelement zum Verschließen der wenigstens einen Öffnung des rahmenartigen Elements beweglich ausgebildet. Dies ist vorteilhaft, da somit beim Transport des Ladeguts keine Ladung aus dem Behälterinnenraum aus dem durch das folienartige Element aufgespannten Behälterinnenraum austreten kann. Ferner dient das Verschließelement in der Ausgangsposition des rahmenartigen Elements auch dem Schutz des zusammengefalteten folienartigen Elements, wenn dieses nicht benutzt wird. Das Verschließelement kann beispielsweise als Einfach- oder Doppeltür ausgebildet sein oder auch als einklickbare, einspannbare oder eindrehbare Platte.

Bei einer weiteren vorteilhaften Ausführungsform weist das Verschließelement eine Verkleidung auf. Vorteilhaft ist diese Verkleidung zu dem Behälterinnenraum hin ausgebildet und verhindert das Einklemmen oder Beschädigen des folienartigen Elements.

Darüber hinaus ist denkbar, dass das folienartige Element schalldämmend ausgebildet ist. Dies ist vorteilhaft, da sowohl bei Lade- als auch bei Entladevorgang der Kipp-Behältervorrichtung Lärm in Form von Schallwellen bedingt wird, welche durch das folienartige Element zumindest teilweise absorbiert werden.

Selbstverständlich ist die erfindungsgemäße Vorrichtung nicht auf die genannten Beispiele beschränkt, sondern beliebig erweiterbar. So ist beispielsweise denkbar, dass die erfindungsgemäße Kipp-Behältervorrichtung bei Kippaufbauten, Kippanhängern oder Kippsattelaufliegern, wie beispielsweise Hinterkippmulden, Halbrundmulden oder Kastenmulden, Verwendung findet.

Ferner besteht auch die Möglichkeit die erfindungsgemäße Kipp-Behältervorrichtung anstelle bei LKWs für kippbare Güterwagons vorzusehen.

Weitere vorteilhafte Ausführungsformen ergeben sich aus den beigefügten Zeichnungen.

Darin zeigen:
- Fig. 1: einen Längsschnitt der erfindungsgemäßen Kipp-Behältervorrichtung;
- Fig. 2: einen weiteren Längsschnitt der erfindungsgemäßen KippBehältervorrichtung;
- Fig. 3: einen Querschnitt einer erfindungsgemäßen Kipp-Behältervorrichtung;
- Fig. 4: einen weiteren Querschnitt einer erfindungsgemäßen KippBehältervorrichtung mit einem folienartigen Element; und
- Fig. 5 a -c: eine Rückansicht einer Seitenwand einer erfindungsgemäßen KippBehältervorrichtung;

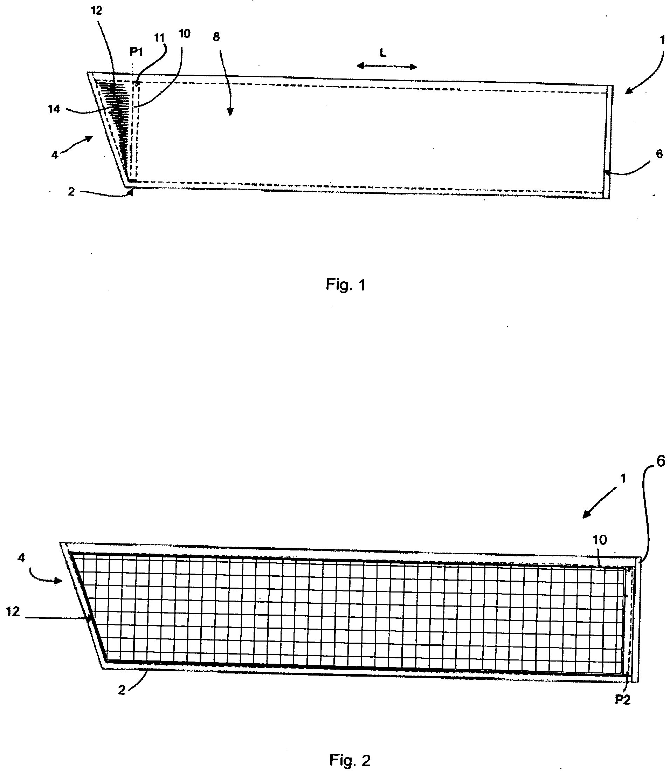

Fig. 1 zeigt einen Längsschnitt einer erfindungsgemäßen Kipp-Behältervorrichtung 1 in Längsrichtung L der Kipp-Behältervorrichtung 1, wobei eine Bodenplatte 2, eine Vorderwand 4 und eine Rückwand 6 sowie zwei sich in Längsrichtung L erstreckenden, einander gegenüber liegende Seitenwände 17, 18 (nicht gezeigt) den Behälterinnenraum 8 aufspannen.

Innerhalb dieses Behälterinnenraumes 8 ist ein rahmenartiges Element 10 in einer ersten Position P1 dargestellt. In dieser Ausgangsposition P1 des rahmenartigen Elementes 10 ist das folienartige Element 12 zusammengefaltet in dem Bereich 14 angeordnet, welcher von der Vorderwand 4, den daran angeordneten Seitenwänden 17, 18 (nicht gezeigt) sowie dem rahmenartigen Element 10 aufgespannt wird. Vorteilhaft ist der Bereich 14 derart ausgebildet, dass das zusammengefaltete folienartige Element 12 von diesem Bereich 14 vollständig aufgenommen wird. Mittels Führungselementen 11 ist das rahmenartige Element 10 hier beispielhaft in schienenartigen Elementen (nicht gezeigt) in Längsrichtung L führbar und verschiebbar angeordnet. In diesem Ausführungsbeispiel sind die Führungselemente 11 im oberen Bereich des rahmenartigen Elements 10 angeordnet. Vorteilhaft können entsprechende Führungselemente auch im unteren Bereich des rahmenartigen Elements in der Nähe der Bodenplatte 2 angeordnet sein. Bevorzugt sind die Führungselemente 15 komplementär zu den nicht gezeigten schienenartigen Elementen ausgebildet, wobei letztere sowohl an der Bodenplatte 2 als auch an den Seitenwänden 17, 18 (nicht gezeigt) angeordnet sein können.

In Fig. 2 wird ein weiterer Längsschnitt der Kipp-Behältervorrichtung 1 gezeigt, wobei hier das rahmenartige Element 10 in Längsrichtung L der Kipp-Behältervorrichtung 1 verschoben ist und in seiner Endposition P2 angeordnet ist. Vorteilhaft ist das rahmenartige Element 10 in dieser Endposition P2 arretierbar und reversibel verschiebbar. Eine derartige Arretierung kann beispielsweise mittels Rast-, Schnapp- oder auch Schraubmechanismus erfolgen. Vorteilhaft ist das rahmenartige Element in dieser Endposition P2 direkt zu der beweglich ausgebildeten Rückwand 6 der Kipp-Behältervorrichtung 1 benachbart angeordnet und beispielsweise mittels Dichtelementen aus Kunststoff vom dieser beabstandet.

In dem in Fig. 2 dargestellten Längsschnitt der erfindungsgemäßen Kipp-Behältervorrichtung 1 ist das folienartige Element 12 entfaltet dargestellt, sodass vorteilhaft die Seitenflächen 17, 18 (hier nicht gezeigt) sowie die Fläche der Vorderwand 4 als auch die Bodenfläche 2 der Kipp-Behältervorrichtung 1 von dem folienartigen Element 12, in im Wesentlichen jeweils paralleler Anordnung, bedeckt sind. Vorteilhaft ist das rahmenartige Element 10 zumindest teilweise von dem folienartigen Element 12 überdeckt.

Zur besseren Führung des rahmenartigen Elements 10 sowie des folienartigen Elements 12 weisen bevorzugt zwei sich gegenüber liegende Seitenwände, welche sich in Längsrichtung L der erfindungsgemäßen Kipp-Behältervorrichtung 1 erstrecken, schienenartige Elemente auf (nicht gezeigt). Derartige schienenartige Elemente können sowohl in der Nähe der Bodenplatte 2 als auch im oberen Bereich zur Öffnung der Kipp-Behältervorrichtung 1 angeordnet sein. Ferner wäre auch denkbar, diese schienenartigen Elemente lediglich zusätzlich auf oder auch ausschließlich nur auf der Bodenplatte 2 vorzusehen.

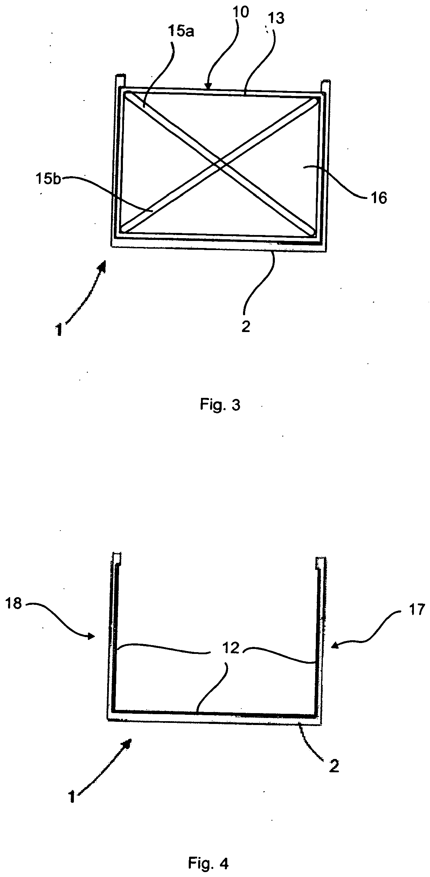

In Fig. 3 ist ein Querschnitt einer erfindungsgemäßen Kipp-Behältervorrichtung 1 gezeigt, welcher die erfindungsgemäße Kipp-Behältervorrichtung 1 in der Ausgangsposition P1 des rahmenartigen Elements 10 darstellt. Das rahmenartige Element 10 weist einen Rahmen 13 auf, welcher durch zwei diagonal angeordnete Verstrebungen 15a, 15b ergänzt und stabilisiert wird. Zwischen dem Rahmen 13 und den Verstrebungen 15a, 15b werden verschließbare Öffnungen 16 des rahmenartigen Elements 10 bedingt, durch welche das Ladegut aus dem Behälterinnenraum abführbar ist.

Im Vergleich hierzu zeigt Fig. 4 einen Querschnitt einer erfindungsgemäßen Kipp-Behältervorrichtung 1, wobei das folienartige Element 12 hierbei entfaltet und gespannt vorliegt. Aus Fig. 4 wird ersichtlich, dass das folienartige Element 12 sowohl die beiden sich in Längsrichtung L der erfindungsgemäßen Kipp-Behältervorrichtung 1 erstreckenden Seitenwände 17 und 18 sowie entlang der Bodenplatte 2 diese im Wesentlichen bedecken und nahezu parallel zu diesen Flächen der erfindungsgemäßen Kipp-Behältervorrichtung 1 angeordnet ist.

Durch Beaufschlagung des folienartigen Elementes 12 mit Zugspannung wird eine Faltenbildung verhindert, sodass dass das Ladegut unproblematisch be- und entladen werden kann. Unter Zugspannung ist eine derartige Kraft zu verstehen, unter welcher das folienartige Element 12 intakt bleibt, gespannt vorliegt und nicht überdehnt wird, sodass die Elastizität des folienartigen Elements dieses weiterhin nach Beendigung der Kraftbeaufschlagung in seine ursprüngliche Form und auch Ausgangslage zurückführt.

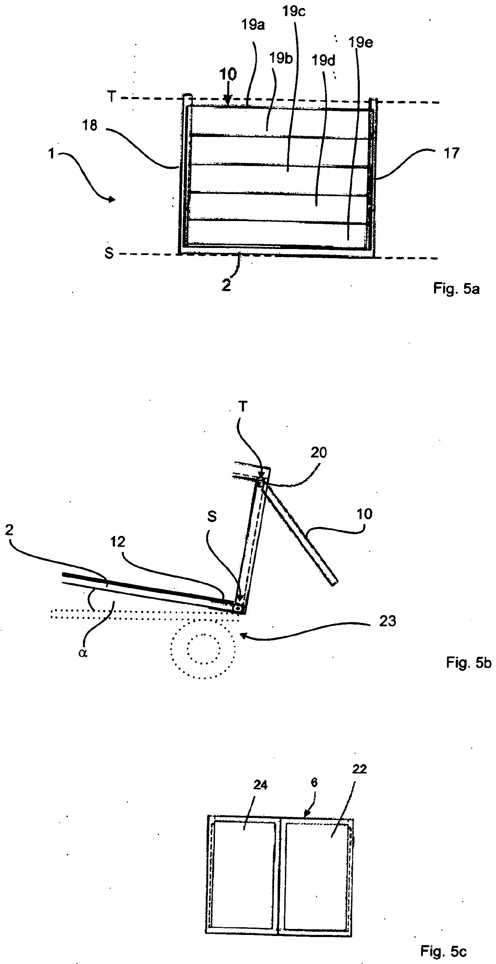

In Fig. 5a ist eine Rückansicht einer erfindungsgemäßen Kipp-Behältervorrichtung 1 gezeigt, wobei die Seitenwände 17 und 18 sowie die Bodenplatte 2 von dem rahmenartigen Element 10 abgeschlossen werden, wobei das rahmenartige Element 10 in diesem Ausführungsbeispiel mehrteilig, bevorzugt 5-teilig, ausgebildet ist. Durch Verkippung der erfindungsgemäßen Kipp-Behältervorrichtung 1 um die Schwenkachse S werden, beispielsweise mittels Pendelmechanismus, fünf Öffnungen 19 a - e geöffnet, sodass dass das Ladegut durch diese Öffnungen 19 a - e entnommen werden kann. Vorteilhaft ist hierbei die Rückwand 6 (nicht gezeigt) hydraulisch oder pneumatisch nach unten aufklappbar bzw. mittels Pendelmechanismus um eine weitere Schwenkachse T aufklappbar.

Ferner wäre auch denkbar, wie in Fig. 5b dargestellt, dass das rahmenartige Element 10, welches in diesem Ausführungsbeispiel keine Öffnung aufweist, sondern durchgängig ausgebildet ist, aufgrund einer gelenkartigen Lagerung 20 in Querrichtung der erfindungsgemäßen Kipp-Behältervorrichtung 1 um die Schwenkachse T pendelbar ist. Durch Verkippung der Kipp-Behältervorrichtung 1 wird eine schräge Ebene bedingt, so dass sich das rahmenartige Element 10 öffnet, um das Ladegut entfernen zu können. Bevorzugt kann an der Bodenplatte 2 ein ausfahrbares und/oder ausklappbares Schutzelement 21 angeordnet sein, um das Ladegut kontrollierter aus der Kipp-Behältervorrichtung 1 entfernen zu können. Das Schutzelement 21 ist im einfachsten Fall als Schüttgutabweiser ausgebildet und beispielsweise aus Metal oder Kunststoff vorgesehen.

Die Bodenplatte 2 ist bevorzugt aus Metall, wie beispielsweise Aluminium, Stahl oder einer Kombination hieraus ausgebildet. Über einen Kippmechanismus um die Schwenkachse S ist die Bodenplatte 2 der Kipp-Behältervorrichtung 1 mit dem Fahrgestell 23, beispielweise eines LKWs oder eines LKW-Anhängers, in Verbindung. Je nach Ladegut wird die Kipp-Behältervorrichtung 1 um den Drehwinkel α von der horizontalen Position in eine Schräge überführt.

In Fig. 5c ist die abschließende Rückwand 6 der erfindungsgemäßen Kipp-Behältervorrichtung 1 dargestellt, welche im einfachsten Ausführungsbeispiel als eine zweiteilige Tür mit einem ersten Türflügel 22 und einem zweiten Türflügel 24 ausgebildet ist. Vorteilhaft lassen sich beide Türflügel 22, 24 manuell mittels Scharnierlagerung seitlich nach außen öffnen.

Selbstverständlich sind die hier genannten Ausführungsbeispiele nicht darauf begrenzt, sondern können je nach Anwendungsfall beliebig erweitert werden. So ist beispielsweise auch denkbar, dass das rahmenartige Element im einfachsten Ausführungsbeispiel manuell durch Kraftbeaufschlagung in Längsrichtung L der erfindungsgemäßen Kipp-Behältervorrichtung 1 verschiebbar ist. Ferner wäre jedoch auch denkbar, das rahmenartige Element 10 motorisiert vorzusehen, sodass lediglich per Knopfdruck eine entsprechende Positionsänderung des rahmenartigen Elements 10 bedingt werden könnte. Hierzu sind vorteilhaft eine Steuerungseinheit sowie wenigstens ein Antriebsmotor vorgesehen. Somit kann das rahmenartige Element 10 in beliebiger Position entlang der Längsachse L verschoben werden.

Darüber hinaus wäre auch denkbar, dass die Rückwand 6 der Kipp-Behältervorrichtung 1 unbeweglich ausgebildet ist und eine der Seitenwände 17 oder 18 bewegbar ausgebildet ist. Das rahmenartige Element 10 wäre in diesem Ausführungsbeispiel in Querrichtung der Kipp-Behältervorrichtung 1 verschiebbar angeordnet. Entsprechende Ausbildungen des rahmenartigen Elements 10 bzw. des folienartigen Elements 12, wie oben beschrieben, sind auch auf die diese Ausführungsform übertragbar.

Ferner ist denkbar, dass das folienartige Element 12 derart ausgebildet ist, dass es im entfalteten Zustand, also wenn sich das rahmenartige Element 10 in seiner Endposition P2 befindet, die nach oben gerichtete Öffnung der erfindungsgemäßen Kipp-Behältervorrichtung 1 ebenfalls schließt. Dies ist vorteilhaft, insbesondere wenn feuchtigkeitsempflindliches Ladegut transportiert werden soll.

Zudem ist denkbar, dass das folienartige Element 10, das rahmenartige Element 12 sowie die Rückwand 6 eine gemeinsame, durchgängige, verschließbare Öffnung aufweisen, welche bevorzugt im Bereich der Bodenplatte 2 angeordnet ist. Eine derartige Öffnung ist beispielsweise als Schleuse ausgebildet und mittels Schieber verschließbar.

Sämtliche in den Anmeldungsunterlagen offenbarte Merkmale werden als erfindungswesentlich beansprucht, sofern sie einzeln oder in Kombination gegenüber dem Stand der Technik neu sind.

### Bezugszeichenliste

- 1: Kipp-Behältervorrichtung
- 2: Bodenplatte
- 4: Vorderwand
- 6: Rückwand
- 8: Behälterinnenraum
- 10: rahmenartiges Element
- 11: führungsartiges Element
- 12: folienartiges Element
- 13: Rahmen
- 14: Bereich
- 15a, b: Verstrebungen
- 16: Öffnungen des rahmenartigen Elements
- 17, 18: Seitenflächen
- 19a-e: weitere Öffnungen des rahmenartigen Elements
- 20: Lagerung
- 21: Schüttgutabweiser
- 22: erster Türflügel
- 23: Fahrgestell
- 24: zweiter Türflügel
- P1: Ausgangsposition
- P2: Endposition
- L: Längsrichtung
- S: erste Schwenkachse
- T: weitere Schwenkachse

## Patentansprüche

1. Kipp-Behältervorrichtung (1), insbesondere für den Straßen-, Schienen- und Schiffsverkehr, mit einem Behältergehäuse, welches eine Bodenplatte (2) und wenigstens vier, die Bodenplatte (2) umgebende, Seitenwände (4, 6, 17, 18) aufweist, wodurch durch die Bodenplatte (2) und die Seitenwände (4, 6, 17, 18) ein Behälterinnenraum (8) aufgespannt ist, wobei wenigstens eine der Seitenwände (4, 6, 17, 18) beweglich ausgebildet ist,
wobei ein flexibles, folienartiges Element (12) zumindest teilweise an einem in dem Behälterinnenraum (8) angeordneten rahmenartigen Element (10) angeordnet ist, wobei das rahmenartige Element (10) in wenigstens zwei Positionen (P1, P2) entlang einer Achse des Behältergehäuses verschiebbar ist
**dadurch gekennzeichnet, dass**
durch Fixierung des folienartigen Elements (12) an der dem rahmenartigen Element (10) gegenüberliegenden Seitenwand (4, 6, 17, 18) der Kipp-Behältervorrichtung (1) bei der Verschiebung des rahmenartigen Elementes (10) auf zumindest eine der Positionen (P2) entlang einer Achse des Behältergehäuses das folienartige Element (12) aufgefaltet und aufgespannt wird.

2. Kipp-Behältervorrichtung (1) nach Anspruch 1,
**dadurch gekennzeichnet, dass** das folienartige Element (12) entnehmbar angeordnet ist.

3. Kipp-Behältervorrichtung (1) nach wenigstens einem der vorangegangenen Ansprüche,
**dadurch gekennzeichnet, dass** das folienartige Element (12) aus einem Material ausgebildet ist, welches aus einer Gruppe von Materialien ausgewählt ist, welche Kunststoffe, Verbundwerkstoffe, faserverstärkte Kunststoffe, Textilien oder eine Kombination hieraus enthält.

4. Kipp-Behältervorrichtung (1) nach wenigstens einem der vorangegangenen Ansprüche,
**dadurch gekennzeichnet, dass** das folienartige Element (12) als Thermoisolationsbarriere ausgebildet ist.

5. Kipp-Behältervorrichtung (1) nach Anspruch 1,
**dadurch gekennzeichnet, dass** das rahmenartige Element (10) in Längsrichtung (L) des Behälterinnenraumes (8) in wenigstens einer ersten Position (P1) als Ausgangsposition und einer zweiten Position (P2) verschiebbar angeordnet ist.

6. Kipp-Behältervorrichtung (1) nach Anspruch 5,
**dadurch gekennzeichnet, dass** das rahmenartige Element (10) mittels schienenartigen Elementen, welche zumindest teilweise an einer der Seitenwände (4, 6, 17, 18), bevorzugt an zwei sich gegenüberliegenden Seitenwänden (4, 6, 17, 18) fixiert sind, verschiebbar ausgebildet ist.

7. Kipp-Behältervorrichtung (1) nach wenigstens einem der vorangegangenen Ansprüche,
**dadurch gekennzeichnet, dass** das rahmenartige Element (10) wenigstens eine Öffnung (16; 19) aufweist.

8. Kipp-Behältervorrichtung (1) nach Anspruch 7,
**dadurch gekennzeichnet, dass** das folienartige Element (12) an dem rahmenartigen Element (10) lösbar befestigt ist und dass das folienartige Element (12) wenigstens eine Aussparung aufweist, welche im Wesentlichen deckungsgleich mit der wenigstens einen Öffnung (16; 19) des rahmenartigen Elements (10) ausgebildet ist, sodass der Behälterinnenraum (8) durch beide Öffnungen zugänglich ist.

9. Kipp-Behältervorrichtung (1) nach wenigstens einem der vorangegangenen Ansprüche,
**dadurch gekennzeichnet, dass** wenigstens ein Verschließelement zum Verschließen der wenigstens einen Öffnung (16; 19) des rahmenartigen Elements (10) beweglich ausgebildet ist.

10. Kipp-Behältervorrichtung (1) nach wenigstens einem der vorangegangenen Ansprüche,
**dadurch gekennzeichnet, dass** das Verschließelement eine Verkleidung aufweist.

## Claims

1. Tiltable container device (1), in particular for road, rail and shipping transport, comprising a container housing, which has a base panel (2) and at least four side walls (4, 6, 17, 18) surrounding the base panel (2), so that the base panel (2) and the side walls (4, 6, 17, 18) define a container interior (8), wherein at least one of the side walls (4, 6, 17, 18) is designed to be movable, wherein a flexible, film-like element (12) is arranged at least partially on a frame-like element (10) arranged in the container interior (8), wherein the frame-like element (10) can be moved into at least two positions (P1, P2) along an axis of the container housing, **characterised in that**, by fixing of the film-like element (12) on the side wall (4, 6, 17, 18) of the tiltable container device (1) opposite the frame-like element (10), the film-like element (12) is unfolded and stretched when the frame-like element (10) is moved to at least one of the positions (P2) along an axis of the container housing.

2. Tiltable container device (1) according to claim 1, **characterised in that** the film-like element (12) is arranged so as to be removable.

3. Tiltable container device (1) according to at least one of the preceding claims, **characterised in that** the film-like element (12) is formed from a material selected from a group of materials which includes plastics, composite materials, fibre-reinforced plastics textiles or a combination thereof.

4. Tiltable container device (1) according to at least one of the preceding claims, **characterised in that** the film-like element (12) is formed as a thermal insulation barrier.

5. Tiltable container device (1) according to claim 1, **characterised in that** the frame-like element (10) is arranged in the longitudinal direction (L) of the container interior (8) in at least one first position (P1) as starting position and a second position (P2) so as to be movable.

6. Tiltable container device (1) according to claim 5, **characterised in that** the frame-like element (10) is designed to be movable by means of rail-like elements which are fixed at least partially on one of the side walls (4, 6, 17, 18), preferably on two opposite side walls (4, 6, 17, 18).

7. Tiltable container device (1) according to at least one of the preceding claims, **characterised in that** the frame-like element (10) has at least one opening (16; 19).

8. Tiltable container device (1) according to claim 7, **characterised in that** the film-like element (12) is releasably fastened to the frame-like element (10), and that the film-like element (12) has at least one cutout which is designed to be substantially congruent with the at least one opening (16; 19) of the frame-like element (10), so that the container interior (8) is accessible through both openings.

9. Tiltable container device (1) according to at least one of the preceding claims, **characterised in that** at least one closure element designed for closing the at least one opening (16; 19) of the frame-like element (10) is designed to be movable.

10. Tiltable container device (1) according to at least one of the preceding claims, **characterised in that** the closure element has a covering.

## Revendications

1. Dispositif à contenant basculant (1), en particulier pour le transport routier, ferroviaire et maritime, comprenant un corps de contenant, lequel présentant une plaque inférieure (2) et au moins quatre parois latérales (4, 6, 17, 18) entourant la plaque inférieure (2), un espace intérieur (8) du contenant étant établi par la plaque inférieure (2) et les parois latérales (4, 6, 17, 18), dans lequel au moins une des parois latérales (4, 6, 17, 18) est mobile,
dans lequel un élément flexible en forme de feuille (12) étant agencé au moins en partie sur un élément en forme de cadre (10) agencé dans l'espace intérieur (8) du contenant, dans lequel l'élément en forme de cadre (10) peut être déplacé dans au moins deux positions (P1, P2) le long d'un axe du corps du contenant
**caractérisé en ce que**
par une fixation de l'élément en forme de feuille (12) à la paroi latérale (4, 6, 17, 18) du dispositif à contenant basculant (1) opposée de l'élément en forme de cadre (10), l'élément en forme de feuille (12) est déplié et étiré lors du déplacement de l'élément en forme de cadre (10) vers au moins une des positions (P2) le long d'un axe du corps de contenant.

2. Dispositif à contenant basculant (1) selon la revendication 1,
**caractérisé en ce que**
l'élément en forme de feuille (12) est monté amovible.

3. Dispositif à contenant basculant (1) selon au moins l'une des revendications précédentes,
**caractérisé en ce que**
l'élément en forme de feuille (12) est fait d'un matériau choisi dans un groupe de matériaux contenant des matières plastiques, des matériaux composites, des matières plastiques renforcées par des fibres, des textiles ou une combinaison de ces derniers.

4. Dispositif à contenant basculant (1) selon au moins l'une des revendications précédentes,
**caractérisé en ce que**
l'élément en forme de feuille (12) est réalisé sous la forme d'une barrière thermo-isolante.

5. Dispositif à contenant basculant (1) selon la revendication 1,
**caractérisé en ce que**
l'élément en forme de cadre (10) est agencé de manière à pouvoir se déplacer dans la direction longitudinale (L) de l'espace intérieur (8) du contenant dans au moins une première position (P1) faisant office de position de départ et une deuxième position (P2).

6. Dispositif à contenant basculant (1) selon la revendication 5,
**caractérisé en ce que**
l'élément en forme de cadre (10) peut être déplacé au moyen d'éléments en forme de rail, lesquels sont fixés au moins en partie sur une des parois latérales (4, 6, 17, 18), de préférence sur deux parois latérales (4, 6, 17, 18) opposées.

7. Dispositif à contenant basculant (1) selon au moins l'une des revendications précédentes,
**caractérisé en ce que**
l'élément en forme de cadre (10) comprend au moins une ouverture (16, 19).

8. Dispositif à contenant basculant (1) selon la revendication 7,
**caractérisé en ce que**
l'élément en forme de feuille (12) est fixé de manière détachable sur l'élément en forme de cadre (10) et **en ce que** l'élément en forme de feuille (12) comprend au moins un évidement, lequel coïncide sensiblement avec l'ouverture ou les ouvertures (16 ; 19) de l'élément en forme de cadre (10), de sorte que l'espace intérieur (8) du contenant est accessible par les deux ouvertures.

9. Dispositif à contenant basculant (1) selon au moins l'une des revendications précédentes,
**caractérisé en ce que**
au moins un élément de fermeture permettant de fermer l'ouverture ou les ouvertures (16 ; 19) de l'élément en forme de cadre (10) est mobile.

10. Dispositif à contenant basculant (1) selon au moins l'une des revendications précédentes,
**caractérisé en ce que**
l'élément de fermeture comprend un revêtement.
